# EUROPEAN PATENT SPECIFICATION

(11) **EP 3 034 576 B1**
(45) Date of publication and mention of the grant of the patent: **26.06.2019**
(21) Application number: 14198948.3
(22) Date of filing: 18.12.2014
(51) Int. Cl.: C09J 133/08, C09J 133/10, C09J 133/06, C08K 5/00

(54) **PRESSURE SENSITIVE ADHESIVE FOR OUTDOOR APPLICATIONS**
DRUCKEMPFINDLICHER KLEBSTOFF FÜR AUSSENANWENDUNGEN
ADHÉSIF SENSIBLE À LA PRESSION POUR APPLICATIONS EXTÉRIEURES

(43) Date of publication of application: 22.06.2016
(73) Proprietor: 3M Innovative Properties Company, St. Paul, MN 55133-3427 (US)
(72) Inventor: Eckhardt, Doreen, 41542 Dormagen (DE); Goeb, Siegfried, 47877 Willich (DE); Waid, Robert, Saint Paul, MN Minnesota 55133-3427 (US); Reimann, Stefan, 50321 Bruehl (DE); Kempf, Michael, 41460 Neuss (DE)
(74) Representative: Gabriel, Kiroubagaranne

(56) References cited:
- EP-A1- 2 746 356
- US-A1- 2010 104 864
- US-A1- 2014 057 091

## Description

### Technical Field

The present disclosure relates generally to the field of adhesives, more specifically to the field of pressure sensitive adhesives (PSA). The present disclosure also relates to a method of manufacturing such pressure sensitive adhesives and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive adhesive tapes over the years, performance requirements have become more demanding. Shear holding capability, for example, which originally was intended for applications supporting modest loads at room temperature, has now increased substantially for many applications in terms of operating temperature and load. Indeed, many applications require pressure sensitive adhesives to support a load at elevated temperatures, typically in the range of from 70°C to 90°C, for which high cohesive strengths are required.

When used for outdoor applications, in particular for transportation and construction market applications, pressure sensitive adhesive tapes have to provide operability at a wide temperature range, and in particular acceptable performance at extreme temperatures, such as e.g. high temperature up to 90°C. In addition, pressure sensitive adhesive tapes suitable for outdoor applications, in particular for automotive and aerospace applications, may further be required to provide good adhesion performance to various types of substrate, including the so-called LSE and MSE substrates, i.e. substrates having respectively a low and a medium surface energy.

It is therefore a recognized and continuous challenge in the adhesive tapes industry to provide pressure sensitive adhesive tapes combining good adhesion and good cohesion properties at elevated temperatures.

Partial solutions have been described e.g. in US-A1-2003/0157337 (Abend), whereby pressure sensitive adhesive layers are thermally after-treated so as to increase the creep-resistance at elevated temperatures.

US2014/0057091 discloses an adhesive tape comprising a support material consisting of an acrylate-based foam layer, on which a pressure-sensitive adhesive layer is applied.

Without contesting the technical advantages associated with the pressure sensitive adhesive tapes known in the art, there is still a need for a pressure sensitive adhesive having excellent and versatile adhesion characteristics, in particular with respect to shear resistance properties at elevated temperatures.

Other advantages of the pressure sensitive adhesives and methods of the disclosure will be apparent from the following description.

### Summary

According to one aspect, the present disclosure relates to a pressure sensitive adhesive composition comprising:
a) from 20 wt% to 80 wt% of a methacrylate copolymer component, based on the weight of the pressure sensitive adhesive composition, wherein the (meth)acrylate copolymer comprises:
   i. C₁-C₃₂ (meth)acrylic acid ester monomer units;
   ii. ethylenically unsaturated monomer units having functional groups selected from the group consisting of acid, hydroxyl, acid anhydride, epoxide, amine, amide groups, and any combinations thereof; and
   iii. optionally, further ethylenically unsaturated monomer units which are copolymerizable with monomer units (i) and/or (ii);
b) from 0.1 wt% to 10 wt% of a thermal crosslinking system, based on the weight of the pressure sensitive adhesive composition;
c) from 1 wt% to 20 wt%, from 3 wt% to 15 wt%, or even from 5 wt% to 15 wt% of expandable microspheres, based on the weight of the pressure sensitive adhesive composition;
d) from 20 wt% to 70 wt% of a tackifying system, based on the weight of the pressure sensitive adhesive composition, wherein the tackifying system comprises a tackifying resin having a softening point greater than 110°C, when measured according to the test method ASTM E28-14; and
e) optionally, from 0.5 wt% to 20 wt% of pigments, based on the weight of the pressure sensitive adhesive composition;
wherein the (meth)acrylate copolymer has a tangent delta value of not greater than 0.5 at 90°C, when determined according to the test method described in the experimental section.

In another aspect, the present disclosure relates to a pressure sensitive adhesive assembly comprising a first pressure sensitive adhesive layer, wherein the first pressure sensitive adhesive layer comprises a pressure sensitive adhesive composition as above described.

In still another aspect of the present disclosure, it is provided a method of manufacturing a pressure sensitive adhesive, which comprises the steps of:
a) providing a pressure sensitive adhesive composition as above described;
b) thermally crosslinking the pressure sensitive adhesive composition; and
c) allowing the expandable microsphere(s) to expand, in particular during thermal crosslinking of the pressure sensitive adhesive composition.

According to still another aspect, the present disclosure relates to the use of a pressure sensitive adhesive composition as above described for industrial applications, preferably for outdoor applications, in particular for transportation and construction market applications.

### Detailed description

According to one aspect, the present disclosure relates to a pressure sensitive adhesive composition comprising:
a) from 20 wt% to 80 wt% of a methacrylate copolymer component, based on the weight of the pressure sensitive adhesive composition, wherein the (meth)acrylate copolymer comprises:
   (meth)acrylate copolymer component comprising:
   i. C₁-C₃₂ (meth)acrylic acid ester monomer units;
   ii. ethylenically unsaturated monomer units having functional groups selected from the group consisting of acid, hydroxyl, acid anhydride, epoxide, amine, amide groups, and any combinations thereof; and
   iii. optionally, further ethylenically unsaturated monomer units which are copolymerizable with monomer units (i) and/or (ii);
b) from 0.1 wt% to 10 wt% of a thermal crosslinking system, based on the weight of the pressure sensitive adhesive composition;
c) from 1 wt% to 20 wt%, from 3 wt% to 15 wt%, or even from 5 wt% to 15 wt % of expandable microspheres, based on the weight of the pressure sensitive adhesive composition;
d) from 20 wt% to 70 wt% of a tackifying system, based on the weight of the pressure sensitive adhesive composition, wherein the tackifying system comprises a tackifying resin having a softening point greater than 110°C, when measured according to the test method ASTM E28-14; and
e) optionally, from 0.5 wt% to 20 wt% of pigments, based on the weight of the pressure sensitive adhesive composition;
wherein the (meth)acrylate copolymer has a tangent delta value of not greater than 0.5 at 90°C, when determined according to the test method described in the experimental section.

In the context of the present disclosure, it has surprisingly been found that a pressure sensitive adhesive composition as described above and wherein the (meth)acrylate copolymer has a tangent delta value of not greater than 0.5 at 90°C, when determined according to the test method described in the experimental section, provides excellent and versatile adhesion characteristics, in particular with respect to shear resistance and adhesive properties at elevated temperatures. The pressure sensitive adhesive compositions of the present disclosure are outstandingly suitable for outdoor applications, in particular for outdoor applications at exposure temperatures above 50°C, above 70°C, above 90°C, or even above 100°C. As such, the pressure sensitive adhesive compositions of the present disclosure are particularly suited for outdoor applications in transportation market applications, in particular automotive and aerospace applications, and in construction market applications.

Without wishing to be bound by theory, it is believed that this outstanding suitability is due in particular to the specific tangent delta value requirement fulfilled by the (meth)acrylate copolymer for use herein, and which has been identified as providing the corresponding pressure sensitive adhesive with particularly advantageous shear resistance and adhesive properties at elevated temperatures (up to 90°C).

In a preferred aspect of the pressure sensitive adhesive composition according to the present disclosure, the (meth)acrylate copolymer for use herein has a tangent delta value of not greater than 0.45 at 90°C when determined according to the test method described in the experimental section.

According to a particular aspect of the pressure sensitive adhesive composition according to the present disclosure, the (meth)acrylate copolymer for use herein has a tangent delta value of not less than 0.15 at 90°C when determined according to the test method described in the experimental section.

According to another particular aspect of the pressure sensitive adhesive composition according to the present disclosure, the (meth)acrylate copolymer for use herein has a tangent delta value comprised between 0.15 and 0.50, between 0.15 and 0.45, between 0.20 and 0.45, or even between 0.20 and 0.40, when measured at 90°C according to the test method described in the experimental section.

Formulating (meth)acrylate copolymer components provided with the above-described rheological properties is well within the capabilities of the person skilled in the art of formulating acrylic-based pressure sentive adhesives using the common general knowledge in this technical field.

In some particular aspects, the pressure-sensitive adhesives and assemblies according to the present disclosure are provided with beneficial adhesion characteristics, in particular with respect to peel forces and shear resistance on various types of difficult to adhere surfaces, such as in particular low surface energy (LSE) and medium surface energy (MSE) substrates. Such substrates include, in particular, automotive clear coats and paints, which are known to be challenging-to-bond substrates, especially when applied onto irregular or uneven surfaces.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, polycarbonate (PC), polyvinylchloride (PVC), polyamide (PA), polyurethanes (PUR), thermoplastice elastomers (TPE), polyoxymethylene (POM), polystyrene (PS), poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

In the context of the present disclosure, the expressions "uneven surface" and "irregular surface" are used interchangeably, and are typically meant to refer to a surface which is discontinuous and/or non-flat and/or non-horizontal.

The pressure sensitive adhesives and assemblies according to the disclosure may find particular use for industrial applications, in particular for construction applications, aerospace applications, and automotive applications, more in particular for taped seal on body, taped seal on door, exterior parts attachment and weather-strip tape applications for the automotive industry.

The pressure sensitive adhesive composition according to the present disclosure comprises, as a first technical feature, a (meth)acrylate copolymer component. In the context of the present disclosure, the terms "(meth)acrylate copolymer" and "polyacrylate" may be used interchangeably.

The (meth)acrylate copolymer component for use herein comprises:
i. C₁-C₃₂ (meth)acrylic acid ester monomer units;
ii. ethylenically unsaturated monomer units having functional groups selected from the group consisting of acid, hydroxyl, acid anhydride, epoxide, amine, amide groups, and any combinations thereof; and
iii. optionally, further ethylenically unsaturated monomer units which are copolymerizable with monomer units (i) and/or (ii);

As used herein, the term "alkyl (meth)acrylic acid ester", "alkyl (meth)acrylate" and "alkyl (meth)acrylate ester" are used interchangeably. The term "(meth)acrylate" refers to an acrylate, methacrylate, or both. The term "(meth)acrylic" refers to methacrylic, acrylic, or both. A (meth)acrylic-based" material refers to one prepared from one or more monomers having a (meth)acryloyl group, which is a group of formula CH₂=C(R)-(CO)-where R is hydrogen or methyl.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl, iso-octyl and 2-propylheptyl.

The (meth)acrylate copolymer component for use herein comprises C₁-C₃₂ (meth)acrylic acid ester monomer units. Suitable C₁-C₃₂ (meth)acrylic acid ester monomer units for use herein may be easily identified by those skilled in the art, in the light of the present disclosure.

In a typical aspect, the (meth)acrylate copolymer component for use herein comprises linear or branched alkyl (meth)acrylate ester, preferably a non-polar linear or branched alkyl (meth)acrylate ester having a linear or branched alkyl group comprising from 1 to 32 carbon atoms.

In a particular aspect of the present disclosure, the C₁-C₃₂ (meth)acrylic acid ester monomer units for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

In another particular aspect, the C₁-C₃₂ (meth)acrylic acid ester monomer units for use herein are selected from the group of C₄-C₃₀ (meth)acrylic acid ester monomer units, C₄-C₁₄ (meth)acrylic acid ester monomer units, or even from the group of C₄-C₉ (meth)acrylic acid ester monomer units.

According to another particular aspect of the present disclosure, the C₁-C₃₂ (meth)acrylic acid ester monomer units are selected from the group consisting of C₄-C₉ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.

In another exemplary aspect, the C₁-C₃₂ (meth)acrylic acid ester monomer units are selected from the group consisting of C₁₀-C₃₀ (meth)acrylic acid ester monomer units, preferably from the group consisting of propylheptyl (meth)acrylate, (meth)acrylic acid esters of 2-alkyl alkanols (also known as Guerbet alcohols), in particular (meth)acrylic acid esters derived from a C₁₂-C₃₀ 2-alkyl alkanol and any combinations or mixtures thereof.

In a preferred aspect of the present disclosure, the C₁-C₃₂ (meth)acrylic acid ester monomer units are selected from the group consisting of isooctyl acrylate, 2-ethylhexyl acrylate, and any combinations or mixtures thereof.

In another exemplary aspect, the C₁-C₃₂ (meth)acrylic acid ester monomer units are selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In an advantageous aspect, the C₁-C₃₂ (meth)acrylic acid ester monomer units are selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.

In another aspect, the C₁-C₃₂ (meth)acrylic acid ester monomer units are selected from the group consisting of 2-ethylhexyl acrylate, and iso-octyl acrylate. In a particularly preferred aspect, the polymeric base material for use herein comprises or consists of 2-ethylhexyl acrylate.

According to another advantageous aspect, the C₁-C₃₂ (meth)acrylic acid ester monomer units comprise 2-octyl(meth)acrylate. The 2-octyl (meth)acrylate may be prepared by conventional techniques from 2-octanol and (meth)acryloyl derivates such as esters, acids and acyl halides. The 2-octanol may be prepared by treatment of ricinoleic acid, derived from castor oil, (or ester or acyl halide thereof) with sodium hydroxide, followed by distillation from the co-product sebacic acid.

It is however preferred that the 2-octyl(meth)acrylate monomer for use herein is at least partly, preferably completely (i.e. 100 wt%) derived from biological material, more preferably from a plant material. This may advantageously be used to provide adhesive films/tapes which are at least partly derived from "green" sources, which is ecologically more sustainable and also reduces the dependency on mineral oil and the price development.

In the context of the present disclosure, the term "derived from biological material" is meant to express that from a certain chemical ingredient, at least a part of its chemical structure comes from biological materials, preferably at least 50 wt% of its structure. This definition is in principle the same as for bio-diesel fuel, in which usually only the fatty acid part originates from biological sources whereas the methanol may also be derived from fossil material like coal or mineral oil.

Accordingly, in one particular aspect, at least 50 wt%, at least 75 wt%, or even 100 wt% of the chemical structure of the 2-octyl(meth)acrylate is at least partly, preferably completely (i.e. 100 wt%) derived from biological material, more preferably from a plant material.

The C₁-C₃₂ (meth)acrylic acid ester monomer units for use herein may be present in the (meth)acrylate copolymer component in any suitable amounts.. In some exemplary aspects, the C₁-C₃₂ (meth)acrylic acid ester monomer units for use herein may be present in the (meth)acrylate copolymer component in an amount of from 45 wt% to 99 wt%, based on the weight of the (meth)acrylate copolymer component.

The (meth)acrylate copolymer component for use herein further comprises ethylenically unsaturated monomer units having functional groups selected from the group consisting of acid, hydroxyl, acid anhydride, epoxide, amine, amide groups, and any combinations thereof. Suitable ethylenically unsaturated monomer units having required functional groups may be easily identified by those skilled in the art, in the light of the present disclosure.

In an advantageous aspect, the functional groups present in the ethylenically unsaturated monomer units for use herein are able to enter into a reaction with epoxide groups. According to an exemplary aspect of the present disclosure, the ethylenically unsaturated monomer units having functional groups are selected from the group of ethylenically unsaturated monomer units having functional groups selected from the group consisting of carboxyl, carboxylic acid, sulphonic acid, phosphonic acid, hydroxyl, acid anhydride, epoxide, amine, amide groups, and any combinations thereof.

In a particular aspect, the ethylenically unsaturated monomer units having functional groups for use herein are selected from the group of ethylenically unsaturated monomer units having functional groups selected from the group consisting of carboxyl, hydroxyl, and any combinations thereof.

In another particular aspect of the present disclosure, the ethylenically unsaturated monomer units having functional groups for use herein are selected from the group consisting of acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.

According to a preferred aspect, the ethylenically unsaturated monomer units having functional groups are selected from the group of acrylic acid monomers.

The ethylenically unsaturated monomer units having functional groups for use herein may be present in the (meth)acrylate copolymer component in any suitable amounts. In some exemplary aspects, the ethylenically unsaturated monomer units having functional groups for use herein may be present in the (meth)acrylate copolymer component in an amount of from 1 wt% to 15 wt%, based on the weight of the (meth)acrylate copolymer component.

The (meth)acrylate copolymer component for use herein may further comprise, as an optional ingredient, further ethylenically unsaturated monomer units which are copolymerizable with monomer units (i) and/or (ii). Suitable further ethylenically unsaturated monomer units which are copolymerizable with monomer units (i) and/or (ii) may be easily identified by those skilled in the art, in the light of the present disclosure.

As further ethylenically unsaturated monomer units which are copolymerizable with monomer units (i) and/or (ii), it is possible in principle to use all compounds with vinylic functionalization which are copolymerizable with monomer units (i) and/or (ii). The further ethylenically unsaturated monomer units for use herein may advantageously serve to adjust the properties of the resultant pressure sensitive adhesive composition.

Suitable further ethylenically unsaturated monomer units for use herein include, but are not limited to, those selected from the group consisting of methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclo-hexyl acrylate, 3,5-dimethyladamantyl acrylate, 4-cumylphenyl methacrylate, cyanoethyl acrylate, cyanoethyl methacrylate, 4-biphenyl acrylate, 4-biphenyl methacrylate, 2-naphthyl acrylate, 2-naphthyl methacrylate, tetrahydrofurfuryl acrylate, diethylamino-ethyl acrylate, diethylaminoethyl methacrylate, dimethylaminoethyl acrylate, dimethyl-aminoethyl methacrylate, 2-butoxyethyl acrylate, 2-butoxyethyl methacrylate, methyl 3-methoxyacrylate, 3-methoxybutyl acrylate, phenoxyethyl acrylate, phenoxyethyl methacrylate, 2-phenoxyethyl methacrylate, butyldiglycol methacrylate, ethylene glycol acrylate, ethylene glycol monomethylacrylate, methoxy polyethylene glycol methacrylate 350, methoxy polyethylene glycol methacrylate 500, propylene glycol monomethacrylate, butoxydiethylene glycol methacrylate, ethoxytriethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropyl-acrylamide, dimethylaminopropylmethacrylamide, N-(1-methylundecypacrylamide, N-(n-butoxymethyl)acrylamide, N-(butoxymethyl)methacrylamide, N-(ethoxymethyl)-acrylamide, N-(n-octadecyl)acrylamide, and also N,N-dialkyl-substituted amides, such as, for example, N,N-dimethylacrylamide, N,N-dimethylmethacrylamide, N-benzylacrylamide, N-isopropylacrylamide, N-tert-butylacrylamide, N-tert-octylacrylamide, N-methylolacryl-amide, N-methylolmethacrylamide, acrylonitrile, methacrylonitrile, vinyl ethers, such as vinyl methyl ether, ethyl vinyl ether, vinyl isobutyl ether, vinyl esters, such as vinyl acetate, vinyl chloride, vinyl halides, vinylidene chloride, vinylidene halides, vinylpyridine, 4-vinylpyridine, N-vinylphthalimide, N-vinyllactam, N-vinylpyrrolidone, styrene, α- and p-methylstyrene, α-butylstyrene, 4-n-butylstyrene, 4-n-decylstyrene, 3,4-dimethoxystyrene, macromonomers such as 2-polystyrene-ethyl methacrylate (molecular weight Mw from 4000 to 13 000 g/mol), poly(methyl methacrylate)ethyl methacrylate (Mw from 2000 to 8000 g/mol).

The further ethylenically unsaturated monomer units which are copolymerizable with monomer units (i) and/or (ii) may advantageously also be selected such that they contain functional groups which support subsequent radiation-chemical crosslinking (by electron beams, UV, for example). Suitable copolymerizable photoinitiators are, for example, benzoin acrylate and acrylate-functionalized benzophenone derivatives. Monomers which support crosslinking by electron irradiation are, for example, tetrahydrofurfuryl acrylate, N-tert-butylacrylamide, and allyl acrylate.

In an advantageous aspect of the present disclosure, the optional further ethylenically unsaturated monomer units which are copolymerizable with monomer units (i) and/or (ii) are selected from the group consisting of methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, and any combinations or mixtures thereof.

According to a particular aspect, the optional further ethylenically unsaturated polar monomer units which are copolymerizable with monomer units (i) are selected from the group consisting of methyl acrylate, ethyl acrylate, isobornyl acrylate, and any combinations or mixtures thereof.

The further ethylenically unsaturated monomer units which are copolymerizable with monomer units (i) and/or (ii) for use herein may be present in the (meth)acrylate copolymer component in any suitable amounts. In some exemplary aspects, the further ethylenically unsaturated monomer units which are copolymerizable with monomer units (i) and/or (ii) for use herein may be present in the (meth)acrylate copolymer component in an amount of from 0 wt% to 40 wt%, based on the weight of the (meth)acrylate copolymer component.

In a particular aspect, the (meth)acrylate copolymer component for use herein comprises:
a) from 45 wt% to 99 wt% of C₁-C₃₂ (meth)acrylic acid ester monomer units, based on the weight of the (meth)acrylate copolymer component;
b) from 1 wt% to 15 wt% of ethylenically unsaturated monomer units having functional groups, based on the weight of the (meth)acrylate copolymer component; and
c) from 0 wt% to 40 wt% of further ethylenically unsaturated polar monomer units which are copolymerizable with monomer units (i) and/or (ii), based on the weight of the (meth)acrylate copolymer component.

In the context of the present disclosure, the (meth)acrylate copolymer component for use herein is present in the pressure sensitive adhesive composition in an amount of from 20 wt% to 80 wt%, from 20 wt% to 70 wt%, from 25 wt% to 60 wt%, or even from 25 wt% to 50 wt% based on the weight of the pressure sensitive adhesive composition.

The (meth)acrylate copolymer component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular method used may be influenced by the use of the final pressure sensitive adhesive composition. The reaction product of the polymerizable materials can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

In an advantageous aspect, the (meth)acrylate copolymer component is prepared by polymerization of the monomers in solvents, more particularly in solvents with a boiling range from 50 to 150°C or from 60 to 120° C, using the customary amounts of polymerization initiators, these generally being 0.01% to 5%, more particularly 0.1% to 2%, by weight (based on the total weight of the monomers).

In some other methods of preparing the (meth)acrylate copolymer component for use herein, the (co)polymerizable material containing the monomers is partially polymerized so as to increase its viscosity to that corresponding to a viscous material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group).

An initiator for free radical polymerization is typically added to the various monomers used to form the (co)polymerizable material, precursor of the (meth)acrylate copolymer component for use herein. The polymerization initiator can be a thermal initiator, a photoinitiator, or both. Any suitable thermal initiator or photoinitiator known for free radical polymerization reactions can be used. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of (co)polymerizable material. Suitable in principle are all customary initiators that are familiar to the skilled person. Examples of free-radical sources are peroxides, hydroperoxides, and azo compounds, e.g., dibenzoyl peroxide, cumene hydroperoxide, cyclohexanone peroxide, di-tert-butyl peroxide, cyclohexylsulphonyl acetyl peroxide, diisopropyl percarbonate, tert-butyl peroctoate, benzopinacol. In one very preferred procedure, use is made as radical initiator of 2,2'-azobis(2-methylbutyronitrile) (Vazo® 67™ from DuPont) or 2,2'-azobis-(2-methylpropionitrile) (2,2'-azobisisobutyronitrile; AIBN; Vazo® 64™ DuPont).

In some aspects, a thermal initiator is used. Thermal initiators can be water-soluble or water-insoluble (i.e., oil-soluble) depending on the particular polymerization method used. Suitable water-soluble initiators include, but are not limited to, persulfates such as potassium persulfate, ammonium persulfate, sodium persulfate, and mixtures thereof; an oxidation-reduction initiator such as the reaction product of a persulfate and a reducing agent such as a metabisulfite (e.g., sodium metabisulfite) or a bisulfate (e.g., sodium bisulfate); or 4,4'-azobis(4-cyanopentanoic acid) and its soluble salts (e.g., sodium, potassium). Suitable oil-soluble initiators include, but are not limited to, various azo compounds such as those commercially available under the trade designation VAZO from E. I. DuPont de Nemours Co. including VAZO 67, which is 2,2'-azobis(2-methylbutane nitrile), VAZO 64, which is 2,2'-azobis(isobutyronitrile), and VAZO 52, which is (2,2'-azobis(2,4-dimethylpentanenitrile); and various peroxides such as benzoyl peroxide, cyclohexane peroxide, lauroyl peroxide, and mixtures thereof.

In some other aspects, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ) or under the trade designation ESACURE KB-1 from Sartomer (Exton, PA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxy cyclohexyl phenyl ketone (IRGACURE 184), bis(2,4,6-trimethylbenzoyl)phenylphosphineoxide (IRGACURE 819), 1-[4-(2-hydroxyethoxy)phenyl]-2-hydroxy-2-methyl-1-propane-1-one (IRGACURE 2959), 2-benzyl-2-dimethylamino-1-(4-morpholinophenyl)butanone (IRGACURE 369), 2-methyl-1-[4-(methylthio)phenyl]-2-morpholinopropan-1-one (IRGACURE 907), and 2-hydroxy-2-methyl-1-phenyl propan-1-one (DAROCUR 1173).

The particular (co)polymerizable material used to produce the (meth)acrylate copolymer component may optionally further contain chain transfer agents to control the molecular weight of the resultant elastomeric material. Examples of useful chain transfer agents include, but are not limited to, carbon tetrabromide, alcohols, mercaptans such as isooctylthioglycolate, and mixtures thereof. If used, the polymerizable mixture may include up to 0.5 weight of a chain transfer agent based on a total weight of polymerizable material. For example, the polymerizable mixture may contain 0.01 to 0.5 weight percent, 0.05 to 0.5 weight percent, or 0.05 to 0.2 weight percent chain transfer agent.

The (co)polymerizable material used to produce the (meth)acrylate copolymer component may include an organic solvent or may be free or essentially free of an organic solvent. As used herein, the term "essentially free" in reference to an organic solvent means that the organic solvent is present in an amount less than 5 weight percent, less than 4 weight percent, less than 3 weight percent, less than 2 weight percent, or less than 1 weight percent based on the weight of the polymerizable material. If an organic solvent is included in the polymerizable material, the amount is often selected to provide the desired viscosity. Examples of suitable organic solvents include, but are not limited to, methanol, tetrahydrofuran, ethanol, isopropanol, isobutanol, heptane, acetone, methyl ethyl ketone, methyl isobutyl ketone, methyl acetate, ethyl acetate, toluene, xylene, ethylene glycol alkyl ether, and any combinations or mixtures thereof. In a particular aspect, it is made use of mixtures containing isopropanol, particularly in amounts of 2% to 15% by weight, preferably 3% to 10% by weight, based on the solution mixture used.

The pressure sensitive adhesive composition according to the present disclosure further comprises a thermal crosslinking system, which typically comprises a thermal crosslinker, and optionally a crosslinking accelerator.

In the context of the present disclosure, the term "crosslinker" (also referred to as crosslinking agent) is meant to refer to a substance via which the polyacrylate molecules are linked to form three-dimensional structures by formation of covalent bonds. An "accelerator" is a substance which supports the crosslinking reaction by ensuring a significantly increased crosslinking reaction rate in comparison to the absence of the accelerator.

Any commonly known thermal crosslinking system may be used in the context of the present disclosure. Suitable thermal crosslinking system for use herein may be easily identified by those skilled in the art, in the light of the present disclosure.

In a particular aspect, the thermal crosslinker for use herein is selected from the group of compounds comprising functional groups selected from the group consisting of epoxide, oxazoline, oxetane, blocked or non-blocked isocyanate, aziridine, and any combinations or mixtures thereof.

According to an advantageous aspect, the thermal crosslinker for use herein is selected from the group of compounds comprising at least one epoxide group. Suitable thermal crosslinkers containing epoxide groups are in particular polyfunctional epoxides, i.e. those which have at least two epoxide functions per molecule (i.e. are at least difunctional in respect of the epoxide groups). They may be either aromatic or aliphatic compounds.

Examples of suitable polyfunctional epoxides are oligomers of epichlorohydrin, epoxy ethers of polyhydric alcohols (more particularly ethylene, propylene and butylene glycols, polyglycols, thiodiglycols, glycerol, pentaerythritol, sorbitol, polyvinyl alcohol, polyallyl alcohol and the like); epoxy ethers of polyhydric phenols (more particularly resorcinol, hydroquinone, bis(4-hydroxyphenyl)methane, bis(4-hydroxy-3-methylphenyl)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dichlorophenyl)propane, bis(4-hydroxyphenyl)phenylmethane, bis(4-hydroxyphenyl)diphenylmethane, bis(4-hydroxyphenyl)-4'-methylphenylmethane, 1,1-bis(4-hydroxyphenyl)-2,2,2-trichloroethane, bis(4-hydroxyphenyl)-(4-chlorophenyl)methane, 1,1-bis(4-hydroxyphenyl)cyclohexane, bis(4-hydroxyphenyl)cyclohexylmethane, 4,4'-dihydroxybiphenyl, 2,2'-dihydroxybiphenyl, 4,4'-dihydroxydiphenyl sulphone) and also their hydroxyethyl ethers; phenol-formaldehyde condensation products such as phenol alcohols, phenol aldehyde resins and the like; S- and N-containing epoxides (for example N,N-diglycidylaniline, N,N' dimethyldiglycidyl-4,4-diaminodiphenylmethane) and also epoxides prepared by customary methods from polyunsaturated carboxylic acids or monounsaturated carboxylic esters of unsaturated alcohols, glycidyl esters, polyglycidyl esters, which may be obtained by polymerization or copolymerization of glycidyl esters of unsaturated acids, or are obtainable from other acidic compounds (cyanuric acid, diglycidyl sulphide, cyclic trimethylene trisulphone and/or derivatives thereof, and others).

Examples of ethers containing epoxide groups that are very suitable in accordance with the invention include 1,4-butanediol diglycidyl ether, polyglycerol-3 glycidyl ether, cyclohexanedimethanol diglycidyl ether, glycerol triglycidyl ether, neopentyl glycol diglycidyl ether, pentaerythritol tetraglycidyl ether, 1,6-hexanediol diglycidyl ether, polypropylene glycol diglycidyl ether, trimethylolpropane triglycidyl ether, bisphenol A diglycidyl ether and bisphenol F diglycidyl ether.

According to an advantageous aspect of the present disclosure, the thermal crosslinking system for use herein comprises a thermal crosslinker and a crosslinking accelerator. Identifying suitable crosslinking accelerators for use herein is well within the capability of those skilled in the art, in the light of the present disclosure.

In an exemplary aspect of the present disclosure, the crosslinking accelerator for use herein is selected from the group consisting of amines, amides polyamines, polyamides, functional amines and polyamines, functional amides and polyamides, polyfunctional amines and polyamines, polyfunctional amides and polyamides, and any combinations or mixtures thereof.

According to an advantageous aspect, the crosslinking accelerator for use herein is selected from the group of compounds comprising amino groups or amino functionalities. In the context of the present disclosure, the term "amino groups" or "amino functionalities" is meant to refer both to -NH₂ groups and to secondary and tertiary amino groups, in which one or both hydrogen atoms are substituted, particularly by substituted or unsubstituted alkyl groups.

Suitable crosslinking accelerators for use herein include, but are not limited to, 2,2-(di-tert-butylphosphino)ethylamine, 2,2-(diisopropylphosphino)ethylamine, 2,2-(diphenyl-phosphino)ethylamine, N-(3-dimethylaminopropyl)-N,N-diisopropanolamine, (1R,2R)-2-(benzyloxy)cyclohexylamine and (1S,2S)-2-(benzyloxy)cyclohexylamine, N,N-dimethylethanolamine, bis(2-dimethylaminoethyl)ether, N,N,N'-trimethyl-N'-hydroxyethyl-bisaminoethyl ether, 2-(2-dimethylaminoethoxy)ethanol, N,N,N'-trimethylaminoethyl-ethanolamine, 2,2'-dimorpholinodiethyl ether, trans-2-aminocyclohexanol, cis-2-amino-cyclohexanol, bis(2-hydroxycyclohexyl)methylamine, N-cyclopentyl-2-methoxycyclohexylamine and (1S,2S)-2-(diphenylphosphino)cyclohexylamine.

Suitable thermal crosslinkers for use herein may also include isocyanates, more particularly trimerized isocyanates and/or sterically hindered isocyanates that are free of blocking agents. Advantageous crosslinker systems and methods are described e.g. in the descriptions of DE 202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, DE 10 2008 059 050 A, US 2013/0190459 and US 2013/0190460, the relevant contents of which are herewith incorporated by reference. Particularly advantageous crosslinker systems and methods are described in EP 0 752 435 A1, EP 1 978 069 A1, US 2013/0190459 and US 2013/0190460. Suitable accelerant and retardant systems for use herein are described e.g. in the description of US-A1-2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

In the context of the present disclosure, the thermal crosslinking system for use herein is present in the pressure sensitive adhesive composition in an amount of from 0.1 wt% to 10 wt%, from 0.1 wt% to 6 wt%, from 0.2 wt% to 5 wt%, or even from 0.2 wt% to 4 wt% , based on the weight of the pressure sensitive adhesive composition.

The pressure sensitive adhesive composition according to the present disclosure further comprises at least one expandable microsphere. In a preferred aspect, the pressure sensitive adhesive composition comprises a plurality of expandable microspheres.

Any commonly known expandable microspheres may be used in the context of the present disclosure. Suitable expandable microspheres for use herein may be easily identified by those skilled in the art, in the light of the present disclosure.

Examples of suitable commercially available expandable microspheres for use herein include those available from Matsumoto Yushi-Seiyaku, Ltd., Osaka, Japan, under the designations "F30D", "F80SD" and "F100D". Also suitable are expandable polymeric microspheres available from Akzo-Nobel under the designations Expancel®, in particular "Expancel 551", "Expancel 461", "Expancel 091", "Expancel 092 DU 40" or even "Expancel 051 DU 40". Other suitable expandable microspheres are commercially available from Henkel under the designation Dualite®.

The expandable microspheres for use herein may be present in the pressure sensitive adhesive composition in any suitable amounts, depending on the properties desired for the resulting pressure sensitive adhesive. In some exemplary aspects, the expandable microspheres may be present in the pressure sensitive adhesive composition in an amount from 1 wt% to 20 wt%, from 3 wt% to 15 wt%, or even from 5 wt% to 15 wt%, based on the weight of the pressure sensitive adhesive composition.

The pressure sensitive adhesive composition according to the present disclosure may further comprise from 20 wt% to 70 wt% of a tackifying system, based on the weight of the pressure sensitive adhesive composition, wherein the tackifying system comprises a tackifying resin having a softening point greater than 110°C, when measured according to the test method ASTM E28-14.

Any commonly known tackifying system may be used in the context of the present disclosure. Suitable tackifying systems for use herein may be easily identified by those skilled in the art, in the light of the present disclosure.

Any tackifiers that are included in the particular pressure-sensitive adhesive compositions are typically selected to be miscible with the polymerizable material. Any tackifier typically included in conventional pressure-sensitive adhesive compositions may be used. Either solid or liquid tackifiers can be added. Solid tackifiers generally have a weight average molecular weight (Mw) of 10,000 grams per mole or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired.

Tackifiers that are rosin esters are the reaction products of various rosin acids and alcohols. These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company under the trade designations PERMALYN, STAYBELITE, and FORAL as well as from Newport Industries under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. These feed stocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopentadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color, their thermal stability or their process compatibility.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobile Chemical under the trade designation ESCOREZ, and from Newport Industries under the trade designations NURES and H-REZ (Newport Industries).

Suitable tackifying resins include, for example, terpene phenolics, rosins, rosin esters, esters of hydrogenated rosins, synthetic hydrocarbon resins and combinations thereof. Especially suitable tackifying resins include the commercially available tackifying resins: FORAL 85E (a glycerol ester of highly hydrogenated refined gum rosin) commercially available from Eastman, Middelburg, NL), FORAL 3085 (a glycerol ester of highly hydrogenated refined wood rosin) commercially available from Hercules Inc., Wilmington, DE; ESCOREZ 2520 and ESCOREZ 5615 (aliphatic/aromatic hydrocarbon resins) commercially available from ExxonMobil Corp., Houston, TX; and Regalite 7100 (a partially hydrogenated hydrocarbon resin) commercially available from Eastman, Kingsport, Tennessee.

In one advantageous aspect of the pressure sensitive adhesive composition according to the present disclosure, the tackifying resin is selected from the group consisting of C5-based hydrocarbon resins, C9-based hydrocarbon resins, C5/C9-based hydrocarbon resins, and any combinations or mixtures thereof. In another advantageous aspect, the tackifying resin is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

In other exemplary aspects, tackifying resins which can be used are pinene resins and indene resins, and rosins, their disproportionated, hydrogenated, polymerized and esterified derivatives and salts, terpene resins and terpene-phenolic resins, and also C5 resins, C9 resins and other hydrocarbon resins. Combinations of these and further resins may also be used with advantage in order to adjust the properties of the resultant composition in accordance with what is desired. With particular preference it is possible to use all resins that are compatible (soluble) with the polyacrylate in question. In a particular aspect, the pressure sensitive adhesive composition according to the disclosure comprises terpene-phenolic resins and/or rosin esters.

The tackifying resin for use herein has a softening point greater than 110°C, greater than 120°C, greater than 130°C or even greater than 140°C, when determined according to test method ASTM E28-14.

In a particular aspect, the tackifying system comprises a tackifying resin or at least one tackifying resin having a softening point greater than 105°C, greater than 110°C, greater than 120°C, greater than 130°C or even greater than 140°C, when measured according to the test method ASTM E28-14.

In another particular aspect, the tackifying system for use herein comprises a plurality of tackifying resins, wherein all the tackifying resins have a softening point greater than 105°C, greater than 110°C, greater than 120°C, greater than 130°C or even greater than 140°C, when measured according to the test method ASTM E28-14.

According to yet another aspect, the tackifying system for optional use herein comprises a mixture of tackifying resins having a combined softening point, and wherein the combined softening point is greater than 110°C, greater than 120°C, greater than 130°C or even greater than 140°C, when measured according to the test method ASTM E28-14.

In an advantageous aspect, the tackifying resin having a softening point greater than 110°C is selected from the group of hydrocarbon tackifiers, in particular those selected from the group consisting of hydrogenated hydrocarbon tackifiers, hydrated hydrocarbon tackifiers, and any combinations or mixtures thereof. Advantageously still, the tackifying system comprises a tackifying resin having a softening point greater than 105°C and which is selected from the group consisting of C5 or C9 resins, in particular hydrated C5 or C9 resins.

In a particular execution, the tackifying system for us herein is free of terpene resins, in particular terpene phenolic resins.

The tackifying system for use herein is in the pressure sensitive adhesive composition in an amount from 20 wt% to 70 wt%, from 25 wt% to 60 wt%, or even from 25 wt% to 50 wt%, based on the weight of the pressure sensitive adhesive composition.

The pressure sensitive adhesive composition according to the present disclosure may further comprise an optional filler material which is preferably selected from the group consisting of filler particles, in particular expanded perlite, microspheres, expendable and expanded microspheres, glassbeads, glass microspheres, silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof. The disclosure is however not that limited as alternative filler material may be easily identified by those skilled in the art, in the light of the present disclosure. In a particular aspect, the filler material, in particular the particulate filler material comprises hollow glass microspheres. The filler material for use herein may be present in the (co)polymerizable material, in any suitable amounts, depending on the desired properties.

As will be apparent to those skilled in the art of formulating pressure sensitive adhesives, the pressure sensitive adhesive composition may further include one or more conventional, but optional additives depending on the envisaged properties for the resulting pressure sensitive adhesive. Exemplary additional additives include, but are not limited to, one or more plasticizers, UV stabilizers, antistatic agents, colorants, antioxidants, fungicides, bactericides, organic and/or inorganic filler particles, pigments, dyes and any combinations thereof. Advantageously, the additional additives for use herein are non-polymerizable additives.

According to a particular execution, the pressure sensitive adhesive composition according to the present disclosure comprises at least one pigment. Various commonly known pigments may be used in the context of the present disclosure. In a particular aspect, the pigment for use herein is a coloring pigments, in particular dark and black pigments, such as preferably carbon blacks.

When used, the pigment for use herein may be present in the pressure sensitive adhesive composition in any suitable amounts, depending on the properties desired for the resulting pressure sensitive adhesive. In some exemplary aspects, the pigment may be present in the pressure sensitive adhesive composition in an amount from 0.5 wt% to 20 wt%, from 1 wt% to 15 wt%, or even from 1 wt% to 10 wt%, based on the weight of the pressure sensitive adhesive composition.

Acording to a preferred aspect of the present disclosure, the pressure sensitive adhesive composition comprises:
a) from 20 wt% to 80 wt%, from 20 wt% to 70 wt%, from 25 wt% to 60 wt%, or even from 25 wt% to 50 wt% of the (meth)acrylate copolymer component, based on the weight of the pressure sensitive adhesive composition;
b) from 0.1 wt% to 10 wt%, from 0.1 wt% to 6 wt%, from 0.2 wt% to 5 wt%, or even from 0.2 wt% to 4 wt% of a thermal crosslinking system, based on the weight of the pressure sensitive adhesive composition;
c) from 1 wt% to 20 wt%, from 3 wt% to 15 wt%, or even from 5 wt% to 15 wt% of the expandable microsphere, based on the weight of the pressure sensitive adhesive composition;
d) from 20 wt% to 70 wt%, from 25 wt% to 60 wt%, or even from 25 wt% to 50 wt% of the tackifying system, based on the weight of the pressure sensitive adhesive composition; and
e) optionally, from 0.5 wt% to 20 wt%, from 1 wt% to 15 wt%, or even from 1 wt% to 10 wt% of pigments, based on the weight of the pressure sensitive adhesive composition.

The pressure-sensitive adhesives according to the present disclosure are provided with beneficial adhesion characteristics, in particular with respect to shear resistance at elevated temperatures and on various types of difficult to adhere surfaces, such as in particular low surface energy (LSE) and medium surface energy (MSE) substrates.

In a particular aspect, the pressure sensitive adhesive composition according to the present disclosure has a static shear strength value of more than 50 min, more than 100 min, more than 200 min, more than 500 min, more than 1000 min, more than 2000 min more than 4000 min, more than 6000 min, more than 8000 min, or even more than 10000 min, when measured at 90°C according to the static shear test method described in the experimental section.

According to another aspect, the present discoslure relates to a crosslinked pressure sensitive adhesive obtained by performing the steps of:
a) thermally crosslinking a pressure sensitive adhesive composition according to any of the preceding aspects; and
b) allowing the expandable microsphere(s) to expand, in particular during thermal crosslinking of the pressure sensitive adhesive composition.

In still another aspect, the present disclosure relates to a pressure sensitive adhesive assembly comprising a first pressure sensitive adhesive layer, wherein the first pressure sensitive adhesive layer comprises a pressure sensitive adhesive composition or a crosslinked pressure sensitive adhesive as above described.

In a particular execution of the pressure sensitive adhesive assembly, the first pressure sensitive adhesive foam takes the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may result from the incorporation of hollow fillers, such as hollow polymeric particles, hollow glass microspheres or hollow ceramic microspheres. Advantageously, the voids may result from the presence of the expandable microspheres.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

In a particular aspect of the present disclosure, the pressure sensitive adhesive assembly further comprises a second pressure sensitive adhesive layer adjacent to the first pressure sensitive adhesive layer.

In a particular execution, the pressure sensitive adhesive assembly according to the present disclosure takes the form of skin/core type multilayer pressure sensitive adhesive assembly, wherein the first pressure sensitive adhesive foam layer is the core layer of the multilayer pressure sensitive adhesive assembly and the second pressure sensitive adhesive layer is the skin layer of the multilayer pressure sensitive adhesive assembly. This particular execution is commonly referred to as a dual layer polymeric foam tape assembly. According this specific execution, it is preferred that the second pressure sensitive adhesive layer has a lower thickness compared to the polymeric foam core layer. As a way of example, the thickness of the skin layer may typically be in the range from 20 µm to 250 µm, or even from 40 µm to 200 µm, whereas the thickness of the polymeric foam core layer may typically be in the range from 100 µm to 6000 µm, from 400 µm to 3000 µm, or even from 800 µm to 2000 µm. However, the thickness of the various layer(s) comprised in the pressure sensitive adhesive assembly may vary in wide ranges depending on the desired execution and associated properties. By way of example, the thickness can be independently chosen for each layer between 25 µm and 6000 µm, between 40 µm and 3000 µm, between 50 µm and 3000 µm, between 75 µm and 2000 µm, or even between 75 µm and 1500 µm.

Multilayer pressure sensitive adhesive assemblies according to the present disclosure, and in particular dual layer polymeric foam tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer). In some aspects, the multilayer pressure sensitive adhesive assemblies as disclosed herein are smooth, homogenous and consist of layers which are chemically bond to each other, without any delamination occurring. Alternatively, the layers of the multilayer pressure sensitive adhesive assemblies may be adhered to each other by suitable physical surface treatments such as e.g. corona or plasma treatment or chemical surface treatment such as use of primer compositions. Those surface treatment techniques are well known to those skilled in the art.

In some aspects, it may be advantageous for the multilayer pressure sensitive adhesive assemblies of the present disclosure to further comprise a third pressure sensitive adhesive layer which is preferably adjacent to the first pressure sensitive adhesive layer in the side of the first pressure sensitive adhesive layer which is opposed to the side of the first pressure sensitive adhesive layer adjacent to the second pressure sensitive adhesive layer, and thereby forming a three-layered multilayer pressure sensitive adhesive assembly.

Three-layered multilayer pressure sensitive adhesive assemblies according to one aspect of the disclosure, may advantageously take the form of a skin/core/skin multilayer pressure sensitive adhesive assembly, wherein the first pressure sensitive adhesive layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

The first pressure sensitive adhesive layer and/or the second pressure sensitive adhesive layer and/or the third pressure sensitive adhesive layer may have any composition commonly known in the art. As such, the composition of these various layers for use in the multilayer pressure sensitive adhesive assemblies of the present disclosure is not particularly limited.

In a particular aspect, the first pressure sensitive adhesive layer and/or the second pressure sensitive adhesive layer and/or the third pressure sensitive adhesive layer comprise a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the first pressure sensitive adhesive layer and/or the second pressure sensitive adhesive layer and/or the third pressure sensitive adhesive layer comprise a polymer base material selected from the group consisting of polyacrylates, polyurethanes, and any combinations, copolymers or mixtures thereof. According to another typical aspect, the first pressure sensitive adhesive layer and/or the second pressure sensitive adhesive layer and/or the third pressure sensitive adhesive layer comprise a polymer base material selected from the group consisting of polyacrylates, and any combinations, copolymers or mixtures thereof.

According to a preferred aspect of the pressure sensitive adhesive assemblies of the present disclosure, the first pressure sensitive adhesive layer and/or the second pressure sensitive adhesive layer and/or the third pressure sensitive adhesive layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

The pressure sensitive adhesive assembly of the present disclosure can be coated/applied upon a variety of substrates to produce adhesive-coated articles. The substrates can be flexible or inflexible and be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The pressure sensitive adhesive assemblies of the present disclosure may be used in any article conventionally known to use such assemblies such as labels, tapes, signs, covers, marking indices, display components, touch panels, and the like. Flexible backing materials having microreplicated surfaces are also contemplated.

The pressure sensitive adhesive assembly may be coated/applied on a substrate using any conventional coating techniques modified as appropriate to the particular substrate. For example, pressure sensitive adhesive assemblies may be applied/coated to a variety of solid substrates by methods such as roller coating, flow coating, dip coating, spin coating, spray coating knife coating, and die coating. These various methods of coating allow the pressure sensitive adhesive assemblies to be placed on the substrate at variable thicknesses thus allowing a wider range of use of the assemblies.

In still another aspect of the present disclosure, it is provided a method of manufacturing a pressure sensitive adhesive (or a multilayer pressure sensitive adhesive assembly), which comprises the steps of:
a) providing a pressure sensitive adhesive composition as above described;
b) thermally crosslinking the pressure sensitive adhesive composition; and
c) allowing the expandable microsphere(s) to expand, in particular during thermal crosslinking of the pressure sensitive adhesive composition.

According to one particular aspect of the method of manufacturing a pressure sensitive adhesive of the present disclosure is a solvent-free method.

According to another advantageous aspect, the method of manufacturing a pressure sensitive adhesive (or a multilayer pressure sensitive adhesive assembly) comprises a hotmelt processing step, preferably a continuous hotmelt mixing processing step, more preferably a hotmelt extrusion processing step, in particular a twin screw hotmelt extrusion processing step or a planetary roller extrusion step.

In still another particular aspect of the method of manufacturing a pressure sensitive adhesive (or a multilayer pressure sensitive adhesive assembly) of the present disclosure, the first pressure sensitive adhesive skin layer is bonded to the first major surface of the first pressure sensitive adhesive layer, and whereby a second pressure sensitive adhesive skin layer is preferably bonded to the second major surface of the first pressure sensitive adhesive layer, preferably simultaneously with the step of bonding the first pressure sensitive adhesive skin layer to the first major surface of the first pressure sensitive adhesive layer.

According to still another aspect, the present disclosure relates to the use of a pressure sensitive adhesive composition or a multilayer pressure sensitive adhesive assembly as above described for industrial applications, preferably for outdoor applications, in particular for transportation and construction market applications.

In a preferred aspect, the pressure sensitive adhesive composition or the multilayer pressure sensitive adhesive assembly as above described are used for automotive and aerospace applications.

In another preferred aspect, the pressure sensitive adhesive composition or the multilayer pressure sensitive adhesive assembly as above described are used for outdoor applications at exposure temperatures above 50°C, above 70°C, above 90°C, or even above 100°C.

In still another aspect, the present disclosure relates to the use of a pressure sensitive adhesive composition or a multilayer pressure sensitive adhesive assembly as above described for the bonding to a low surface energy substrate and/or a medium surface energy substrate, in particular automotive clear coats/paints.

The following items are herein disclosed:
Item 1 is a pressure sensitive adhesive composition comprising:
   a) a (meth)acrylate copolymer component comprising:
      i. C₁-C₃₂ (meth)acrylic acid ester monomer units;
      ii. ethylenically unsaturated monomer units having functional groups selected from the group consisting of acid, hydroxyl, acid anhydride, epoxide, amine, amide groups, and any combinations thereof; and
      iii. optionally, further ethylenically unsaturated monomer units which are copolymerizable with monomer units (i) and/or (ii);
   b) a thermal crosslinking system;
   c) at least one expandable microsphere;
   d) optionally, a tackifying system; and
   e) optionally, at least one pigment;
   wherein the (meth)acrylate copolymer has a tangent delta value of not greater than 0.5 at 90°C, when determined (in a tangent delta vs. temperature curve) according to the test method described in the experimental.
Item 2 is a pressure sensitive adhesive composition according to item 1, wherein the (meth)acrylate copolymer has a tangent delta value of not greater than 0.45 at 90°C when determined (in a tangent delta vs. temperature curve) according to the test method described in the experimental section.
Item 3 is a pressure sensitive adhesive composition according to any of item 1 or 2, wherein the (meth)acrylate copolymer has a tangent delta value of not less than 0.15 at 90°C when determined (in a tangent delta vs. temperature curve) according to the test method described in the experimental section.
Item 4 is a pressure sensitive adhesive composition according to any of the preceding items, wherein the (meth)acrylate copolymer has a tangent delta value comprised between 0.15 and 0.50, between 0.15 and 0.45, between 0.20 and 0.45, or even between 0.20 and 0.40, when measured at 90°C (in a tan delta vs. temperature curve) according to the test method described in the experimental section.
Item 5 is a pressure sensitive adhesive composition according to any of the preceding items, wherein the C₁-C₃₂ (meth)acrylic acid ester monomer units are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.
Item 6 is a pressure sensitive adhesive composition according to any of the preceding items, wherein the C₁-C₃₂ (meth)acrylic acid ester monomer units are selected from the group of C₄-C₃₀ (meth)acrylic acid ester monomer units, C₄-C₁₄ (meth)acrylic acid ester monomer units, or even from the group of C₄-C₉ (meth)acrylic acid ester monomer units.
Item 7 is a pressure sensitive adhesive composition according to any of the preceding items, wherein the C₁-C₃₂ (meth)acrylic acid ester monomer units are selected from the group consisting of C₄-C₉ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.
Item 8 is a pressure sensitive adhesive composition according to any of the preceding items, wherein the C₁-C₃₂ (meth)acrylic acid ester monomer units are selected from the group consisting of C₁₀-C₃₀ (meth)acrylic acid ester monomer units, preferably from the group consisting of propylheptyl (meth)acrylate, (meth)acrylic acid esters of 2-alkyl alkanols, in particular (meth)acrylic acid esters derived from a C₁₂-C₃₀ 2-alkyl alkanol and any combinations or mixtures thereof.
Item 9 is a pressure sensitive adhesive composition according to any of the preceding items, wherein the C₁-C₃₂ (meth)acrylic acid ester monomer units are selected from the group consisting of isooctyl acrylate, 2-ethylhexyl acrylate, and any combinations or mixtures thereof.
Item 10 is a pressure sensitive adhesive composition according to any of the preceding items, wherein the ethylenically unsaturated monomer units having functional groups are selected from the group of ethylenically unsaturated monomer units having functional groups selected from the group consisting of carboxyl, sulphonic acid, phosphonic acid, hydroxyl, acid anhydride, epoxide, amine, amide groups, and any combinations thereof.
Item 11 is a pressure sensitive adhesive composition according to any of the preceding items, wherein the ethylenically unsaturated monomer units having functional groups are selected from the group of ethylenically unsaturated monomer units having functional groups selected from the group consisting of carboxyl, carboxylic acid, hydroxyl, and any combinations thereof.
Item 12 is a pressure sensitive adhesive composition according to any of the preceding claims, wherein the ethylenically unsaturated monomer units having functional groups are selected from the group consisting of acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.
Item 13 is a pressure sensitive adhesive composition according to any of the preceding items, wherein the ethylenically unsaturated monomer units having functional groups are selected from the group of acrylic acid monomers.
Item 14 is a pressure sensitive adhesive composition according to any of the preceding items, wherein the optional further ethylenically unsaturated monomer units which are copolymerizable with monomer units (i) and/or (ii) are selected from the group consisting of methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, and any combinations or mixtures thereof.
Item 15 is a pressure sensitive adhesive composition according to any of the preceding items, wherein the optional further ethylenically unsaturated polar monomer units which are copolymerizable with monomer units (i) and/or (ii) are selected from the group consisting of methyl acrylate, ethyl acrylate, isobornyl acrylate, and any combinations or mixtures thereof.
Item 16 is a pressure sensitive adhesive composition according to any of the preceding items, wherein the thermal crosslinking system comprises a thermal crosslinker and optionally, a crosslinking accelerator.
Item 17 is a pressure sensitive adhesive composition according to item 16, wherein the thermal crosslinker is selected from the group of compounds comprising functional groups selected from the group consisting of epoxide, oxazoline, oxetane, blocked or non-blocked isocyanates, and any combinations or mixtures thereof.
Item 18 is a pressure sensitive adhesive composition according to any of item 16 or 17, wherein the crosslinking accelerator is selected from the group consisting of amines, amides polyamines, polyamides, functional amines and polyamines, functional amides and polyamides, polyfunctional amines and polyamines, polyfunctional amides and polyamides, and any combinations or mixtures thereof.
Item 19 is a pressure sensitive adhesive composition according to any of the preceding items, wherein the tackifying resin has a softening point greater than 105°C, when measured according to the test method ASTM E28-14.
Item 20 is a pressure sensitive adhesive composition according to any of the preceding items, wherein the tackifying system comprises a tackifying resin having a softening point greater than 105°C, greater than 110°C, greater than 120°C, greater than 130°C or even greater than 140°C, when measured according to the test method ASTM E28-14.
Item 21 is a pressure sensitive adhesive composition according to any of the preceding items, wherein the tackifying system comprises a plurality of tackifying resins, wherein all the tackifying resins have a softening point greater than 105°C, greater than 110°C, greater than 120°C, greater than 130°C or even greater than 140°C, when measured according to the test method ASTM E28-14.
Item 22 is a pressure sensitive adhesive composition according to any of the preceding items, wherein the tackifying system comprises a mixture of tackifying resins having a combined softening point, and wherein the combined softening point is greater than 105°C, greater than 110°C, greater than 120°C, greater than 130°C or even greater than 140°C, when measured according to the test method described ASTM E28-14.
Item 23 is a pressure sensitive adhesive composition according to any of the preceding items, wherein the tackifying system comprises a tackifying resin selected from the group of hydrocarbon tackifiers, in particular those selected from the group consisting of hydrogenated hydrocarbon tackifiers, hydrated hydrocarbon tackifiers, and any combinations or mixtures thereof.
Item 24 is a pressure sensitive adhesive composition according to any of the preceding items, wherein the tackifying system comprises a tackifying resin selected from the group consisting of C5 or C9 resins, in particular hydrated C5 or C9 resins.
Item 25 is a pressure sensitive adhesive composition according to any of the preceding items, wherein the tackifying system is free of terpene resins, in particular terpene phenolic resins.
Item 26 is a pressure sensitive adhesive composition according to any of the preceding items, wherein the optional pigment is selected from the group of dark, in particular black pigments.
Item 27 is a pressure sensitive adhesive composition according to any of the preceding items, which comprises:
   a) from 20 wt% to 80 wt%, from 20 wt% to 70 wt%, from 25 wt% to 60 wt%, or even from 25 wt% to 50 wt% of the (meth)acrylate copolymer component, based on the weight of the pressure sensitive adhesive composition;
   b) from 0.1 wt% to 10 wt%, from 0.1 wt% to 6 wt%, from 0.2 wt% to 5 wt%, or even from 0.2 wt% to 4 wt% of a thermal crosslinking system, based on the weight of the pressure sensitive adhesive composition;
   c) from 1 wt% to 20 wt%, from 3 wt% to 15 wt%, or even from 5 wt% to 15 wt% of the expandable microsphere, based on the weight of the pressure sensitive adhesive composition;
   d) optionally, from 20 wt% to 70 wt%, from 25 wt% to 60 wt%, or even from 25 wt% to 50 wt% of the tackifying system, based on the weight of the pressure sensitive adhesive composition; and
   e) optionally, from 0.5 wt% to 20 wt%, from 1 wt% to 15 wt%, or even from 1 wt% to 10 wt% of pigments, based on the weight of the pressure sensitive adhesive composition.
Item 28 is a pressure sensitive adhesive composition according to any of the preceding items, wherein the (meth)acrylate copolymer component comprises:
   a) from 45 wt% to 99 wt% of C₁-C₃₂ (meth)acrylic acid ester monomer units, based on the weight of the (meth)acrylate copolymer component;
   b) from 1 wt% to 15 wt% of ethylenically unsaturated monomer units having functional groups, based on the weight of the (meth)acrylate copolymer component; and
   c) from 0 wt% to 40 wt% of further ethylenically unsaturated polar monomer units which are copolymerizable with monomer units (i) and/or (ii), based on the weight of the (meth)acrylate copolymer component.
Item 29 is a pressure sensitive adhesive composition according to any of the preceding items, which has a static shear strength value of more than 50 min, more than 100 min, more than 200 min, more than 500 min, more than 1000 min, more than 2000 min more than 4000 min, more than 6000 min, more than 8000 min, or even more than 10000 min, when measured at 90°C according to the static shear test method described in the experimental section.
Item 30 is a crosslinked pressure sensitive adhesive obtained by performing the steps of:
   a) thermally crosslinking a pressure sensitive adhesive composition according to any of the preceding claims; and
   b) allowing the expandable microsphere(s) to expand, in particular during thermal crosslinking of the pressure sensitive adhesive composition.
Item 31 is a pressure sensitive adhesive assembly comprising a first pressure sensitive adhesive layer, wherein the first pressure sensitive adhesive layer comprises a pressure sensitive adhesive composition according to any of items 1 to 29 or a crosslinked pressure sensitive adhesive according to item 30.
Item 32 is a pressure sensitive adhesive assembly according to item 31, wherein the first pressure sensitive adhesive foam takes the form of a polymeric foam layer.
Item 33 is a pressure sensitive adhesive assembly according to any of item 31 or 32, which further comprises a second pressure sensitive adhesive layer adjacent to the first pressure sensitive adhesive layer.
Item 34 is a pressure sensitive adhesive assembly according to any of items 31 to 33, which is in the form of a skin/core multilayer pressure sensitive adhesive assembly, wherein the first pressure sensitive adhesive foam layer is the core layer of the multilayer pressure sensitive adhesive assembly and the second pressure sensitive adhesive layer is the skin layer of the multilayer pressure sensitive adhesive assembly.
Item 35 is a pressure sensitive adhesive assembly according to any of item 33 or 34, which further comprises a third pressure sensitive adhesive layer which is preferably adjacent to the first pressure sensitive adhesive layer in the side of the first pressure sensitive adhesive layer which is opposed to the side of the first pressure sensitive adhesive layer adjacent to the second pressure sensitive adhesive layer.
Item 36 is a pressure sensitive adhesive assembly according to item 35, which is in the form of a skin/core/skin multilayer pressure sensitive adhesive assembly, wherein the first pressure sensitive adhesive layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.
Item 37 is a method of manufacturing a pressure sensitive adhesive (or a multilayer pressure sensitive adhesive assembly), which comprises the steps of:
   a) providing a pressure sensitive adhesive composition according to any of claims 1 to 36;
   b) thermally crosslinking the pressure sensitive adhesive composition; and
   c) allowing the expandable microsphere(s) to expand, in particular during thermal crosslinking of the pressure sensitive adhesive composition.
Item 38 is a method according to claim 37, which is a solvent-free method.
Item 39 is a method according to any of item 37 or 38, which comprises a hotmelt processing step, preferably a continuous hotmelt mixing processing step, more preferably a hotmelt extrusion processing step, in particular a twin screw hotmelt extrusion processing step or a planetary roller extrusion step.
Item 40 is a method according to any of items 37 to 39, whereby a first pressure sensitive adhesive skin layer is bonded to the first major surface of the first pressure sensitive adhesive layer, and whereby a second pressure sensitive adhesive skin layer is preferably bonded to the second major surface of the first pressure sensitive adhesive layer, preferably simultaneously with the step of bonding the first pressure sensitive adhesive skin layer to the first major surface of the first pressure sensitive adhesive layer.
Item 41 is the use of a pressure sensitive adhesive composition or a multilayer pressure sensitive adhesive assembly according to any of items 1 to 36 for industrial applications, preferably for outdoor applications, more preferably for transportation market applications, in particular automotive and aerospace applications, or for construction market applications.
Item 42 is the use according to item 41 for outdoor applications at exposure temperatures above 50°C, above 70°C, above 90°C, or even above 100°C.
Item 43 is the use of a pressure sensitive adhesive composition or a multilayer pressure sensitive adhesive assembly according to any of items 1 to 36 for the bonding to a low surface energy substrate and/or a medium surface energy substrate, in particular automotive clear coats/paints.

### EXAMPLES

The invention is further illustrated by the following examples. These examples are merely for illustrative purposes only and are not meant to be limiting on the scope of the appended claims.

### Test Methods applied:

### Determination of tangent delta at 90°C:

The tangent delta value at 90 °C of the (meth)acrylate copolymer is determined using shear rheological measurements. Measurements are performed on an ARES classic strain controlled shear rheometer available from TA Instruments with force convection oven (FCO) using 8 mm stainless steel parallel plate geometry. The test is conducted at a heating rate of 2 °C/min and a frequency of 1 Hz in a temperature range from -70 to +200 °C. The maximum strain amplitude is within the linear viscoelastic regime of the material. The tangent delta value at a temperature of 90 °C is extracted from the tangent delta vs. temperature measurement curve.

### Static shear test @ 90 °C with 500g (FINAT Test Method No. 8, 8th edition 2009)

The test is carried out at 90°C. Test specimen are cut out having a dimension of 12.7 mm by 25.4 mm. The liner is then removed from one side of the test specimen and the adhesive is adhered onto to an aluminum plate having the following dimension 25.4 mm x 50 mm x 1 mm thickness and comprising a hole for the weight. The second liner is thereafter removed from the test specimen and the small panel with the test specimen is applied onto the respective test panel (clear coat panel) having the following dimensions: 50mm x 50mm x 2mm at the short edge.

Next, the test samples are rolled twice with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell for 24h at ambient room temperature (23°C +/- 2°C, 50% relative humidity +/-5%) prior to testing.

Each sample is then placed into a vertical shear-stand (+2° disposition) at 90°C with automatic time logging. After 10 minutes dwell time in the oven, a 500g weight is hung into the hole of the aluminum plate. The time until failure is measured and recorded in minutes. Target value is 10.000 minutes. Per test specimen two samples are measured. A recorded time of "10000+" indicates that the adhesive does not fail after 10000 min.

### Test panels/substrates used for testing:

The adhesive tests are carried out on the following automotive clear coat panel:
**CeramiClear5** coated panels available from PPG Industries.
The clearcoat includes acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further co-monomers (e.g. styrene). Panels are cut prior to static shear testing to the requested dimension.

Before testing, the automotive clear coat coated panel is cleaned with a 1:1 mixture of distilled water and isopropanol. Test panels are then rubbed dry with a paper tissue.

## Claims

1. A pressure sensitive adhesive composition comprising:
a) from 20 wt% to 80 wt% of a (meth)acrylate copolymer component, based on the weight of the pressure sensitive adhesive composition, wherein the (meth)acrylate copolymer component comprises:
i. C₁-C₃₂ (meth)acrylic acid ester monomer units;
ii. ethylenically unsaturated monomer units having functional groups selected from the group consisting of acid, hydroxyl, acid anhydride, epoxide, amine, amide groups, and any combinations thereof; and
iii. optionally, further ethylenically unsaturated monomer units which are copolymerizable with monomer units (i) and/or (ii);
b) from 0.1 wt% to 10 wt% of a thermal crosslinking system, based on the weight of the pressure sensitive adhesive composition;
c) from 1 wt% to 20 wt%, from 3 wt% to 15 wt%, or even from 5 wt% to 15 wt% of expandable microspheres, based on the weight of the pressure sensitive adhesive composition;
d) from 20 wt% to 70 wt% of a tackifying system, based on the weight of the pressure sensitive adhesive composition, wherein the tackifying system comprises a tackifying resin having a softening point greater than 110°C, when measured according to the test method ASTM E28-14; and
optionally, from 0.5 wt% to 20 wt% of pigments, based on the weight of the pressure sensitive adhesive composition;
wherein the (meth)acrylate copolymer has a tangent delta value of not greater than 0.5 at 90°C, when determined according to the test method described in the experimental section.

2. A pressure sensitive adhesive composition according to claim 1, which comprises:
a) from 20 wt% to 70 wt%, from 25 wt% to 60 wt%, or even from 25 wt% to 50 wt% of the (meth)acrylate copolymer component, based on the weight of the pressure sensitive adhesive composition;
b) from 0.1 wt% to 6 wt%, from 0.2 wt% to 5 wt%, or even from 0.2 wt% to 4 wt% of the thermal crosslinking system, based on the weight of the pressure sensitive adhesive composition;
c) from 1 wt% to 20 wt%, from 3 wt% to 15 wt%, or even from 5 wt% to 15 wt% of the expandable microspheres, based on the weight of the pressure sensitive adhesive composition;
d) from 25 wt% to 60 wt%, or even from 25 wt% to 50 wt% of the tackifying system, based on the weight of the pressure sensitive adhesive composition; and
e) optionally, from 1 wt% to 15 wt%, or even from 1 wt% to 10 wt% of pigments, based on the weight of the pressure sensitive adhesive composition.

3. A pressure sensitive adhesive composition according to any of claim 1 or 2, wherein the (meth)acrylate copolymer has a tangent delta value of not greater than 0.45 at 90°C when determined according to the test method described in the experimental section.

4. A pressure sensitive adhesive composition according to any of the preceding claims, wherein the (meth)acrylate copolymer has a tangent delta value of not less than 0.15 at 90°C when determined according to the test method described in the experimental section.

5. A pressure sensitive adhesive composition according to any of the preceding claims, wherein the (meth)acrylate copolymer has a tangent delta value comprised between 0.15 and 0.50, between 0.15 and 0.45, between 0.20 and 0.45, or even between 0.20 and 0.40, when measured at 90°C (in a tan delta vs. temperature curve) according to the test method described in the experimental section.

6. A pressure sensitive adhesive composition according to any of the preceding claims, wherein the C₁-C₃₂ (meth)acrylic acid ester monomer units are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

7. A pressure sensitive adhesive composition according to any of the preceding claims, wherein the ethylenically unsaturated monomer units having functional groups are selected from the group of ethylenically unsaturated monomer units having functional groups selected from the group consisting of carboxyl, sulphonic acid, phosphonic acid, hydroxyl, acid anhydride, epoxide, amine, amide groups, and any combinations thereof.

8. A pressure sensitive adhesive composition according to any of the preceding claims, wherein the ethylenically unsaturated monomer units having functional groups are selected from the group of acrylic acid monomers.

9. A pressure sensitive adhesive composition according to any of the preceding claims, wherein the optional further ethylenically unsaturated monomer units which are copolymerizable with monomer units (i) and/or (ii) are selected from the group consisting of methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, and any combinations or mixtures thereof.

10. A pressure sensitive adhesive composition according to any of the preceding claims, wherein the optional further ethylenically unsaturated polar monomer units which are copolymerizable with monomer units (i) and/or (ii) are selected from the group consisting of methyl acrylate, ethyl acrylate, isobornyl acrylate, and any combinations or mixtures thereof.

11. A pressure sensitive adhesive composition according to any of the preceding claims, wherein the thermal crosslinking system comprises a crosslinking accelerator.

12. A pressure sensitive adhesive composition according to claim 11, wherein the thermal crosslinker is selected from the group of compounds comprising functional groups selected from the group consisting of epoxide, oxazoline, oxetane, blocked or non-blocked isocyanates, and any combinations or mixtures thereof.

13. A pressure sensitive adhesive composition according to any of the preceding claims, wherein the tackifying system comprises a tackifying resin having a softening point greater than 120°C, greater than 130°C or even greater than 140°C, when measured according to the test method ASTM E28-14.

14. A pressure sensitive adhesive composition according to any of the preceding claims, wherein the tackifying system comprises a tackifying resin selected from the group of hydrocarbon tackifiers, in particular those selected from the group consisting of hydrogenated hydrocarbon tackifiers, hydrated hydrocarbon tackifiers, and any combinations or mixtures thereof.

15. A method of manufacturing a pressure sensitive adhesive, which comprises the steps of:
a) providing a pressure sensitive adhesive composition according to any of claims 1 to 14;
b) thermally crosslinking the pressure sensitive adhesive composition; and
c) allowing the expandable microsphere(s) to expand, in particular during thermal crosslinking of the pressure sensitive adhesive composition.

16. Use of a pressure sensitive adhesive composition according to any of claims 1 to 14 for outdoor applications at exposure temperatures above 50°C, above 70°C, above 90°C, or even above 100°C.

## Patentansprüche

1. Haftkleberzusammensetzung, die Folgendes umfasst:
a) zu 20 Gew.-% bis 80 Gew.-% einen (Meth-)acrylatcopolymerbestandteil, bezogen auf das Gewicht der Haftkleberzusammensetzung, wobei der (Meth-)acrylatcopolymerbestandteil Folgendes umfasst:
i. C₁-C₃₂-(Meth-)acrylsäureester-Monomereinheiten;
ii. ethylenisch ungesättigte Monomereinheiten mit funktionellen Gruppen, ausgewählt aus der Gruppe bestehend aus Säure-, Hydroxyl-, Säureanhydrid-, Epoxid-, Amin-, Amidgruppen und beliebigen Kombinationen davon; und
iii. wahlweise ferner ethylenisch ungesättigte Monomereinheiten, die mit Monomereinheiten (i) und/oder (ii) copolymerisierbar sind;
b) zu 0,1 Gew.-% bis 10 Gew.-% ein thermisches Vernetzungssystem, bezogen auf das Gewicht der Haftkleberzusammensetzung;
c) zu 1 Gew.-% bis 20 Gew.-%, zu 3 Gew.-% bis 15 Gew.-% oder sogar zu 5 Gew.-% bis 15 Gew.-% expandierbare Mikrokügelchen, bezogen auf das Gewicht der Haftkleberzusammensetzung;
d) zu 20 Gew.-% bis 70 Gew.-% ein Haftvermittlersystem, bezogen auf das Gewicht der Haftkleberzusammensetzung, wobei das Haftvermittlersystem ein Klebeharz mit einem Erweichungspunkt von mehr als 110 °C umfasst, gemessen gemäß der Testmethode ASTM E28-14; und
wahlweise zu 0,5 Gew.-% bis 20 Gew.-% Pigmente, bezogen auf das Gewicht der Haftkleberzusammensetzung;
wobei das (Meth-)acrylatcopolymer einen Tangens-Delta-Wert von nicht mehr als 0,5 bei 90 °C aufweist, bestimmt gemäß dem im Experimentabschnitt beschriebenen Prüfverfahren.

2. Haftkleberzusammensetzung nach Anspruch 1, die Folgendes umfasst:
a) zu 20 Gew.-% bis 70 Gew.-%, zu 25 Gew.-% bis 60 Gew.-% oder sogar zu 25 Gew.-% bis 50 Gew.-% den (Meth-)acrylatcopolymerbestandteil, bezogen auf das Gewicht der Haftkleberzusammensetzung;
b) zu 0,1 Gew.-% bis 6 Gew.-%, zu 0,2 Gew.-% bis 5 Gew.-% oder sogar zu 0,2 Gew.-% bis 4 Gew.-% das thermische Vernetzungssystem, bezogen auf das Gewicht der Haftkleberzusammensetzung;
c) zu 1 Gew.-% bis 20 Gew.-%, zu 3 Gew.-% bis 15 Gew.-% oder sogar zu 5 Gew.-% bis 15 Gew.-% die expandierbaren Mikrokügelchen, bezogen auf das Gewicht der Haftkleberzusammensetzung;
d) zu 25 Gew.-% bis 60 Gew.-% oder sogar zu 25 Gew.-% bis 50 Gew.-% das Haftvermittlersystem, bezogen auf das Gewicht der Haftkleberzusammensetzung; und
e) wahlweise zu 1 Gew.-% bis 15 Gew.-% oder sogar zu 1 Gew.-% bis 10 Gew.-% Pigmente, bezogen auf das Gewicht der Haftkleberzusammensetzung.

3. Haftkleberzusammensetzung nach einem der Ansprüche 1 oder 2, wobei das (Meth-)acrylatcopolymer einen Tangens-Delta-Wert von nicht mehr als 0,45 bei 90 °C aufweist, bestimmt gemäß dem im Experimentabschnitt beschriebenen Prüfverfahren.

4. Haftkleberzusammensetzung nach einem der vorstehenden Ansprüche, wobei das (Meth-)acrylatcopolymer einen Tangens-Delta-Wert von nicht weniger als 0,15 bei 90 °C aufweist, bestimmt gemäß dem im Experimentabschnitt beschriebenen Prüfverfahren.

5. Haftkleberzusammensetzung nach einem der vorstehenden Ansprüche, wobei das (Meth-)acrylatcopolymer einen Tangens-Delta-Wert zwischen 0,15 und 0,50, zwischen 0,15 und 0,45, zwischen 0,20 und 0,45 oder sogar zwischen 0,20 und 0,40 aufweist, gemessen bei 90 °C (in einer Kurve von Tan Delta als Funktion der Temperatur) gemäß dem im Experimentabschnitt beschriebenen Prüfverfahren.

6. Haftkleberzusammensetzung nach einem der vorstehenden Ansprüche, wobei die C₁-C₃₂-(Meth-)acrylsäureester-Monomereinheiten ausgewählt sind aus der Gruppe von C₁-C₂₅-(Meth-)acrylsäureester-Monomereinheiten, C₁-C₂₀-(Meth-)acrylsäureester-Monomereinheiten, C₁-C₁₈-(Meth-)acrylsäureester-Monomereinheiten, C₂-C₁₆-(Meth-)acrylsäureester-Monomereinheiten, C₂-C₁₄-(Meth-)acrylsäureester-Monomereinheiten oder insbesondere C₂-C₁₄-(Meth-)acrylsäureester-Monomereinheiten.

7. Haftkleberzusammensetzung nach einem der vorstehenden Ansprüche, wobei die ethylenisch ungesättigten Monomereinheiten mit funktionellen Gruppen ausgewählt sind aus der Gruppe von ethylenisch ungesättigten Monomereinheiten mit funktionellen Gruppen, ausgewählt aus der Gruppe bestehend aus Carboxyl-, Sulfonsäure-, Phosphonsäure-, Hydroxyl-, Säureanhydrid-, Epoxid-, Amin-, Amidgruppen und beliebigen Kombinationen davon.

8. Haftkleberzusammensetzung nach einem der vorstehenden Ansprüche, wobei die ethylenisch ungesättigten Monomereinheiten mit funktionellen Gruppen aus der Gruppe von Acrylsäuremonomeren ausgewählt sind.

9. Haftkleberzusammensetzung nach einem der vorstehenden Ansprüche, wobei die fakultativen weiteren ethylenisch ungesättigten Monomereinheiten, die mit Monomereinheiten (i) und/oder (ii) copolymerisierbar sind, ausgewählt sind aus der Gruppe bestehend aus Methylacrylat, Ethylacrylat, Propylacrylat, Methylmethacrylat, Ethylmethacrylat, Benzylacrylat, Benzylmethacrylat, sek-Butylacrylat, tert-Butylacrylat, Phenylacrylat, Phenylmethacrylat, Isobornylacrylat, Isobornylmethacrylat, tert-Butylphenylacrylat, tert-Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat und beliebigen Kombinationen oder Mischungen davon.

10. Haftkleberzusammensetzung nach einem der vorstehenden Ansprüche, wobei die fakultativen weiteren ethylenisch ungesättigten polaren Monomereinheiten, die mit Monomereinheiten (i) und/oder (ii) copolymerisierbar sind, ausgewählt sind aus der Gruppe bestehend aus Methylacrylat, Ethylacrylat, Isobornylacrylat und beliebigen Kombinationen oder Mischungen davon.

11. Haftkleberzusammensetzung nach einem der vorstehenden Ansprüche, wobei das thermische Vernetzungssystem einen Vernetzungsbeschleuniger umfasst.

12. Haftkleberzusammensetzung nach Anspruch 11, wobei das thermische Vernetzungsmittel ausgewählt ist aus der Gruppe von Verbindungen, umfassend funktionelle Gruppen, ausgewählt aus der Gruppe bestehend aus Epoxid, Oxazolin, Oxetan, blockierten oder nichtblockierten Isocyanaten und beliebigen Kombinationen oder Mischungen davon.

13. Haftkleberzusammensetzung nach einem der vorstehenden Ansprüche, wobei das Haftvermittlersystem ein Klebeharz mit einem Erweichungspunkt von mehr als 120 °C, mehr als 130 °C oder sogar mehr als 140 °C umfasst, gemessen gemäß der Testmethode ASTM E28-14.

14. Haftkleberzusammensetzung nach einem der vorstehenden Ansprüche, wobei das Haftvermittlersystem ein Klebeharz umfasst, ausgewählt aus der Gruppe von Kohlenwasserstoff-Haftvermittlern, insbesondere diejenigen, die ausgewählt sind aus der Gruppe bestehend aus hydrierten Kohlenwasserstoff-Haftvermittlern, hydratisierten Kohlenwasserstoff-Haftvermittlern und beliebigen Kombinationen oder Mischungen davon.

15. Verfahren zum Herstellen eines Haftklebers, das die folgenden Schritte umfasst:
a) das Bereitstellen einer Haftkleberzusammensetzung nach einem der Ansprüche 1 bis 14;
b) die thermische Vernetzung der Haftkleberzusammensetzung; und
c) das Expandierenlassen des bzw. der Mikrokügelchen(s), insbesondere während der thermischen Vernetzung der Haftkleberzusammensetzung.

16. Verwendung einer Haftkleberzusammensetzung nach einem der Ansprüche 1 bis 14 für Außenanwendungen bei Expositionstemperaturen über 50 °C, über 70 °C, über 90 °C oder sogar über 100 °C.

## Revendications

1. Composition d'adhésif sensible à la pression comprenant :
a) de 20 % en poids à 80 % en poids d'un composant copolymère de (méth)acrylate, sur la base du poids de la composition d'adhésif sensible à la pression, dans laquelle le composant copolymère de (méth)acrylate comprend :
i. des motifs monomères ester d'acide (méth)acrylique en C₁ à C₃₂ ;
ii. des motifs monomères à insaturation éthylénique ayant des groupes fonctionnels choisis dans le groupe constitué de groupes acide, hydroxyle, anhydride d'acide, époxyde, aminé, amide, et n'importe quelle combinaison de ceux-ci ; et
iii. éventuellement, d'autres motifs monomères à insaturation éthylénique qui sont copolymérisables avec les motifs monomères (i) et/ou (ii) ;
b) de 0,1 % en poids à 10 % en poids d'un système de réticulation thermique, sur la base du poids de la composition d'adhésif sensible à la pression ;
c) de 1 % en poids à 20 % en poids, de 3 % en poids à 15 % en poids, ou même de 5 % en poids à 15 % en poids de microsphères expansibles, sur la base du poids de la composition d'adhésif sensible à la pression ;
d) de 20 % en poids à 70 % en poids d'un système poisseux, sur la base du poids de la composition d'adhésif sensible à la pression, dans lequel le système poisseux comprend une résine poisseuse ayant un point de ramollissement supérieur à 110 °C, lorsqu'on mesure selon le procédé de test ASTM E28-14 ; et
éventuellement, de 0,5 % en poids à 20 % en poids de pigments, sur la base du poids de la composition d'adhésif sensible à la pression ;
dans laquelle le copolymère de (méth)acrylate a une valeur de tangente delta ne dépassant pas 0,5 à 90 °C, lorsqu'elle est déterminée selon le procédé de test décrit dans la section expérimentale.

2. Composition d'adhésif sensible à la pression selon la revendication 1, qui comprend :
a) de 20 % en poids à 70 % en poids, de 25 % en poids à 60 % en poids, ou même de 25 % en poids à 50 % en poids du composant copolymère de (méth)acrylate, sur la base du poids de la composition d'adhésif sensible à la pression ;
b) de 0,1 % en poids à 6 % en poids, de 0,2 % en poids à 5 % en poids, ou même de 0,2 % en poids à 4 % en poids du système de réticulation thermique, sur la base du poids de la composition d'adhésif sensible à la pression ;
c) de 1 % en poids à 20 % en poids, de 3 % en poids à 15 % en poids, ou même de 5 % en poids à 15 % en poids des microsphères expansibles, sur la base du poids de la composition d'adhésif sensible à la pression ;
d) de 25 % en poids à 60 % en poids, ou même de 25 % en poids à 50 % en poids du système poisseux, sur la base du poids de la composition d'adhésif sensible à la pression ; et
e) éventuellement, de 1 % en poids à 15 % en poids, ou même de 1 % en poids à 10 % en poids de pigments, sur la base du poids de la composition d'adhésif sensible à la pression.

3. Composition d'adhésif sensible à la pression selon l'une quelconque des revendications 1 ou 2, dans laquelle le copolymère de (méth)acrylate a une valeur de tangente delta ne dépassant pas 0,45 à 90 °C lorsqu'elle est déterminée selon le procédé de test décrit dans la section expérimentale.

4. Composition d'adhésif sensible à la pression selon l'une quelconque des revendications précédentes, dans laquelle le copolymère de (méth)acrylate a une valeur de tangente delta qui n'est pas inférieure à 0,15 à 90 °C lorsqu'elle est déterminée selon le procédé de test décrit dans la section expérimentale.

5. Composition d'adhésif sensible à la pression selon l'une quelconque des revendications précédentes, dans laquelle le copolymère de (méth)acrylate a une valeur de tangente delta comprise entre 0,15 et 0,50, entre 0,15 et 0,45, entre 0,20 et 0,45, ou même entre 0,20 et 0,40, lorsqu'on mesure à 90 °C (dans une courbe tan delta par rapport à la température) selon le procédé de test décrit dans la section expérimentale.

6. Composition d'adhésif sensible à la pression selon l'une quelconque des revendications précédentes, dans laquelle les motifs monomères ester d'acide (méth)acrylique en C₁ à C₃₂ sont choisis dans le groupe de motifs monomères ester d'acide (méth)acrylique en C₁ à C₂₅, motifs monomères ester d'acide (méth)acrylique en C₁ à C₂₀, motifs monomères ester d'acide (méth)acrylique en C₁ à C₁₈, motifs monomères ester d'acide (méth)acrylique en C₂ à C₁₆, motifs monomères ester d'acide (méth)acrylique en C₂ à C₁₄, ou même motifs monomères ester d'acide (méth)acrylique en C₂ à C₁₄.

7. Composition d'adhésif sensible à la pression selon l'une quelconque des revendications précédentes, dans laquelle les motifs monomères à insaturation éthylénique ayant des groupes fonctionnels sont choisis dans le groupe de motifs monomères à insaturation éthylénique ayant des groupes fonctionnels choisis dans le groupe constitué des groupes carboxyle, acide sulfonique, acide phosphonique, hydroxyle, anhydride d'acide, époxyde, aminé, amide, et n'importe quelle combinaison de ceux-ci.

8. Composition d'adhésif sensible à la pression selon l'une quelconque des revendications précédentes, dans laquelle les motifs monomères à insaturation éthylénique ayant des groupes fonctionnels sont choisis dans le groupe de monomères d'acide acrylique.

9. Composition d'adhésif sensible à la pression selon l'une quelconque des revendications précédentes, dans laquelle les autres motifs monomères à insaturation éthylénique facultatifs qui sont copolymérisables avec les motifs monomères (i) et/ou (ii) sont choisis dans le groupe constitué d'acrylate de méthyle, acrylate d'éthyle, acrylate de propyle, méthacrylate de méthyle, méthacrylate d'éthyle, acrylate de benzyle, méthacrylate de benzyle, acrylate de sec-butyle, acrylate de tert-butyle, acrylate de phényle, méthacrylate de phényle, acrylate d'isobornyle, méthacrylate d'isobornyle, acrylate de tert-butylphényle, méthacrylate de tert-butylphényle, méthacrylate de dodécyle, acrylate d'isodécyle, acrylate de lauryle, acrylate de n-undécyle, acrylate de stéaryle, acrylate de tridécyle, acrylate de béhényle, méthacrylate de cyclohexyle, méthacrylate de cyclopentyle, et n'importe quelles combinaisons ou n'importe quels mélanges de ceux-ci.

10. Composition d'adhésif sensible à la pression selon l'une quelconque des revendications précédentes, dans laquelle les autres motifs monomères polaires à insaturation éthylénique facultatifs qui sont copolymérisables avec les motifs monomères (i) et/ou (ii) sont choisis dans le groupe constitué d'acrylate de méthyle, acrylate d'éthyle, acrylate d'isobornyle, et n'importe quelles combinaisons ou n'importe quels mélanges de ceux-ci.

11. Composition d'adhésif sensible à la pression selon l'une quelconque des revendications précédentes, dans laquelle le système de réticulation thermique comprend un accélérateur de réticulation.

12. Composition d'adhésif sensible à la pression selon la revendication 11, dans laquelle l'agent de réticulation thermique est choisi dans le groupe de composés comprenant des groupes fonctionnels choisis dans le groupe constitué d'époxyde, oxazoline, oxétane, isocyanates bloqués ou non bloqués, et n'importe quelles combinaisons ou n'importe quels mélanges de ceux-ci.

13. Composition d'adhésif sensible à la pression selon l'une quelconque des revendications précédentes, dans laquelle le système poisseux comprend une résine poisseuse ayant un point de ramollissement supérieur à 120 °C, supérieur à 130 °C ou même supérieur à 140 °C, lorsqu'on mesure selon le procédé de test ASTM E28-14.

14. Composition d'adhésif sensible à la pression selon l'une quelconque des revendications précédentes, dans laquelle le système poisseux comprend une résine poisseuse choisie dans le groupe d'agents poisseux hydrocarbonés, en particulier ceux choisis dans le groupe constitué d'agents poisseux hydrocarbonés hydrogénés, agents poisseux hydrocarbonés hydratés, et n'importe quelles combinaisons ou n'importe quels mélanges de ceux-ci.

15. Procédé de fabrication d'un adhésif sensible à la pression, qui comprend les étapes consistant à :
a) fournir une composition d'adhésif sensible à la pression selon l'une quelconque des revendications 1 à 14 ;
b) réticuler thermiquement la composition d'adhésif sensible à la pression ; et
c) laisser la ou les microsphère(s) expansible(s) s'expanser, en particulier pendant une réticulation thermique de la composition d'adhésif sensible à la pression.

16. Utilisation d'une composition d'adhésif sensible à la pression selon l'une quelconque des revendications 1 à 14 pour des applications en extérieur à des températures d'exposition supérieures à 50 °C, supérieures à 70 °C, supérieures à 90 °C, ou même supérieures à 100 °C.
